# EUROPEAN PATENT APPLICATION

(11) **EP 4 541 860 A1**
(43) Date of publication of application: **23.04.2025**
(21) Application number: 23823582.4
(22) Date of filing: 15.05.2023
(51) Int. Cl.: C08L 101/00, C08K 7/02, C08L 1/00, C08L 23/00

(54) **COMPOSITE RESIN COMPOSITION AND COMPOSITE RESIN MOLDED BODY**

(30) Priority: 14.06.2022 JP 2022095901
(71) Applicant: Panasonic Intellectual Property Management Co., Ltd., Kadoma-shi, Osaka 571-0057 (JP)
(72) Inventor: HAMABE Masashi, Kadoma-shi, Osaka 571-0057 (JP); IMANISHI Masayoshi, Kadoma-shi, Osaka 571-0057 (JP); NAGINO Toshifumi, Kadoma-shi, Osaka 571-0057 (JP); NISHINO Shouma, Kadoma-shi, Osaka 571-0057 (JP)
(74) Representative: Novagraaf International SA
(86) International application number: PCT/JP2023/018113
(87) International publication number: WO 2023/243281

(57) **Abstract**

The composite resin composition includes: a base resin; a low molecular weight resin; a compatibilizer; and a filler. The low molecular weight resin and the base resin belong to a same kind of resin, a molecular weight of the low molecular weight resin is lower than a molecular weight of the base resin, and the compatibilizer has a molecular structure that is substantially a same as a molecular structure of the base resin.

## Description

### TECHNICAL FIELD

The present disclosure relates to a composite resin composition that is excellent in fluidity and moldability and can suppress appearance defects of a molded body such as bleed-out, and a composite resin molded body that is a molded body containing the composite resin composition.

### BACKGROUND ART

So-called "general-purpose plastics" such as polyethylene (PE), polypropylene (PP), polystyrene (PS), and polyvinyl chloride (PVC) are not only very inexpensive but also easy to mold, and have a weight as small as a fraction of that of metal or ceramics. Therefore, general-purpose plastics are often used as materials of various daily commodities such as bags, various packaging, various containers, and sheets, and as materials for industrial components such as automobile components and electrical components, household electrical appliances, building supplies, daily necessities, and miscellaneous goods.

However, general-purpose plastics have disadvantages such as insufficient mechanical strength. Therefore, general-purpose plastics do not have sufficient properties required for materials used for various industrial products including machine products such as automobiles and electric/electronic/information products, and the application range thereof is currently limited.

On the other hand, so-called "engineering plastics" such as polycarbonate, fluororesin, acrylic resin, and polyamide are excellent in mechanical properties, and are used for various industrial products including machine products such as automobiles, and electric/electronic/information products. However, engineering plastics have problems of being expensive, difficulties in monomer recycle, and imposing a large environmental load.

Therefore, there has been a demand for greatly improving the material properties (mechanical strength and the like) of general-purpose plastics. As a known technique, for the purpose of reinforcing a general-purpose plastic, fibrous fillers such as natural fibers, glass fibers, and carbon fibers are dispersed in a general-purpose plastic resin to enhance the mechanical strength of the general-purpose plastic. In addition, also as a known technique, particulate fillers, including an inorganic powder such as talc or silica, or a cellulose-based powder such as pulp powder, waste paper powder, or wood chips, are dispersed in a general-purpose plastic resin to enhance the mechanical strength of the general-purpose plastic. Among them, organic fillers such as cellulose have attracted attention as a reinforcing material because they are inexpensive and excellent in environmental properties at the time of production and disposal.

When a filler is dispersed in a resin, the mechanical strength is improved. Meanwhile, the fillers are entangled in the composite resin, deteriorating the fluidity and moldability. In addition, as the filler is contained in a higher concentration or the filler is a longer fiber, the entanglement increases and the fluidity deteriorates.

In order to improve the fluidity of the filler-dispersed plastic, each company is conducting studies. In Patent Literature 1, a cellulose composite polyethylene that is made of 10% to 70% of a cellulose-based powder and 25% to 89% of polyethylene is added with 0.5% to 17.5% of a wax for improving the fluidity, and thereby a molded body with an improved surface roughness is provided.

### Citation List

### Patent Literature

PTL 1: Japanese Patent No. 3167020

### SUMMARY OF THE INVENTION

However, in Patent Literature 1, the wax used for improving the fluidity is uniformly dispersed in the resin, and therefore the fluidity is improved. However, there is a problem that the wax precipitates on the surface of the molded body, that is, bleed-out. In addition, there is also a problem of strength reduction.

The present disclosure has been made to solve the above-mentioned conventional problems, and an object of the present disclosure is to provide a composite resin composition that suppresses fluidity reduction even when a filler is added in a high concentration, suppresses bleed-out, has high strength, and has good appearance.

In order to achieve the above object, the composite resin composition according to the present disclosure includes: a base resin; a low molecular weight resin; a compatibilizer; and a filler. The low molecular weight resin and the base resin belong to a same kind of resin, a molecular weight of the low molecular weight resin is lower than a molecular weight of the base resin, and the compatibilizer has a molecular structure that is substantially a same as a molecular structure of the base resin.

The composite resin composition according to the present disclosure can realize a composite resin molded body that can achieve both fluidity and strength, and can suppress bleed-out.

### BRIEF DESCRIPTION OF THE DRAWINGS

Fig. 1 is a schematic cross-sectional view illustrating the cross-sectional structure of a composite resin molded body according to the first exemplary embodiment.
Fig. 2 is an enlarged schematic cross-sectional view of a composite resin molded body according to the first exemplary embodiment.
Fig. 3A is a schematic view of a fibrous filler as a constituent member of a composite resin molded body according to the first exemplary embodiment.
Fig. 3B is a partially enlarged view including the end portion of the fibrous filler of Fig. 3A.
Fig. 4 is an electron microscope image of a fibrous filler in a composite resin molded body according to the first exemplary embodiment.
Fig. 5 is a schematic diagram of a production process for the composite resin molded body according to the first exemplary embodiment.
Fig. 6 is Table 1, showing measurement results in each of Examples 1 to 5 and Comparative Examples 1 to 7.

### DESCRIPTION OF EMBODIMENT

The composite resin composition according to the first aspect includes: a base resin; a low molecular weight resin; a compatibilizer; and a filler, wherein the low molecular weight resin is a low molecular weight product of the same kind of resin as the base resin, and the compatibilizer has a molecular structure that is substantially the same as that of the base resin.

The composite resin composition according to the second aspect is that: in the first embodiment, the compatibilizer in the composite resin composition may be a graft polymer of a resin having a molecular structure that is substantially the same as that of the base resin.

The composite resin composition according to the third aspect is that: in the first or second aspect, in the composite resin composition, the number average molecular weight Mnk of the base resin may be more than or equal to 10 times and less than 500 times the number average molecular weight Mnt of the low molecular weight resin, and the composite resin composition may have two molecular weight peaks.

The composite resin composition according to the fourth aspect may have a structure that: in any of the first to third aspects, the low molecular weight resin and the compatibilizer is present in a greater amount around the fibrous filler than in the base resin, and the base resin is present on the outer periphery thereof.

The composite resin composition according to the fifth aspect is that: in any of the first to fourth aspects, in the composite resin composition, the filler includes a fibrous filler and a particulate filler having an aspect ratio smaller than that of the fibrous filler; the fibrous filler has an aspect ratio of more than or equal to 10, and the particulate filler has an aspect ratio of less than or equal to 2; and the fibrous filler is included in a proportion of more than or equal to 1 wt% and less than or equal to 10 wt% of the filler, and the particulate filler is included in a proportion of more than or equal to 50 wt% and less than or equal to 70 wt% of the filler.

The composite resin composition according to the sixth aspect is that: in any of the first to fifth aspects, in the composite resin composition, the fibrous filler may be defibrated only in the end portion in the fiber length direction of the fibrous filler, and the concentration of the low molecular weight resin around the defibrated portion having an increased surface area may be higher than the concentration of the low molecular weight resin around the non-defibrated central portion in the fiber length direction.

The composite resin composition according to the seventh aspect is that: in any of the first to sixth aspects, the filler may be a natural material containing cellulose.

The composite resin composition according to the eighth aspect is that: in any of the first to seventh aspects, in any of the first to eighth aspects, the base resin may be an olefin resin.

The composite resin molded body according to the ninth aspect is a molded body including the composite resin composition according to any of the first to eighth aspects.

Hereinafter, the composite resin composition and the composite resin molded body according to the exemplary embodiment will be described with reference to the accompanying drawings. In the following description, the same components are denoted by the same reference marks, and the description thereof is appropriately omitted.

### (First exemplary embodiment)

### <Composite resin composition and molded body>

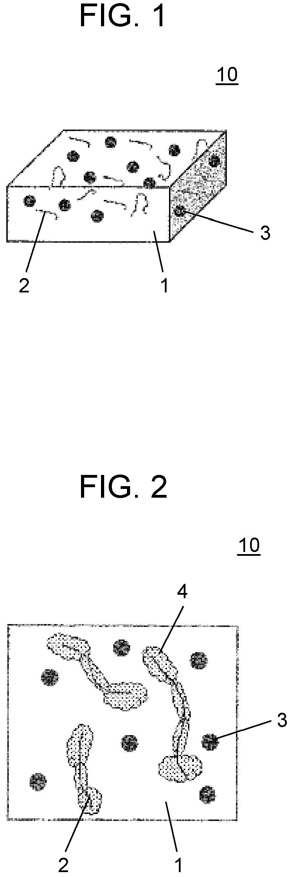

Fig. 1 is a schematic cross-sectional view illustrating the cross-sectional structure of composite resin molded body 10 that is a molded body including the composite resin composition according to the first exemplary embodiment. Fig. 2 is an enlarged schematic cross-sectional view of composite resin molded body 10 according to the first exemplary embodiment.

The composite resin composition according to the first exemplary embodiment includes a melt-kneaded product containing a base resin, a filler, a low molecular weight resin, and an additive. In the composite resin composition, as shown in the schematic cross-sectional views of Figs. 1 and 2, at least fibrous filler 2, particulate filler 3, low molecular weight resin 4, and a compatibilizer as the additive are blended and dispersed in base resin 1.

### <Base resin>

In the first exemplary embodiment, base resin 1 is preferably a thermoplastic resin in order to ensure good moldability. Examples of the thermoplastic resin include olefin-based resins (including cyclic olefin-based resins) such as polyethylene or polypropylene, styrene-based resins, (meth) acrylic resins, organic acid vinyl ester-based resins or derivatives thereof, vinyl ether-based resins, halogen-containing resins, polycarbonate-based resins, polyester-based resins, polyamide-based resins, thermoplastic polyurethane resins, polysulfone-based resins (such as polyethersulfone and polysulfone), polyphenylene ether-based resins (such as polymers of 2,6-xylenol), cellulose derivatives (such as cellulose esters, cellulose carbamates, and cellulose ethers), lignin resins, modified lignin resins, silicone resins (such as polydimethylsiloxane and polymethylphenylsiloxane), rubbers or elastomers (such as diene rubbers including polybutadiene and polyisoprene, styrene-butadiene copolymers, acrylonitrile-butadiene copolymers, acrylic rubbers, urethane rubbers, and silicone rubbers), and engineering plastics. The resin may be petroleum-derived, plant-derived, or microorganism-derived. In addition, the resin may be a recycled resin obtained by reprocessing a resin molded once, and examples of the recycling method include methods such as material recycling and chemical recycling. The resin may be used alone or in combination of two or more thereof. In addition, the resin may have decomposability by microorganisms, water, heat, or the like. Note that base resin 1 is not limited to the above materials as long as it has thermoplastic properties.

Among these thermoplastic resins, base resin 1 is preferably an olefin-based resin or a polyamide-based resin having a relatively low melting point. Examples of the olefin-based resin include a homopolymer of an olefin-based monomer, a copolymer of olefin-based monomers, and a copolymer of an olefin-based monomer and another copolymerizable monomer. Examples of the olefin-based monomer include chain olefins (α-C2-20 olefins such as ethylene, propylene, 1-butene, isobutene, 1-pentene, 4-methyl-1-pentene, and 1-octene), and cyclic olefins. These olefin-based monomers may be used alone or in combination of two or more types thereof. Among the olefin-based monomers, chain olefins such as ethylene and propylene are preferable. Examples of other copolymerizable monomers include fatty acid vinyl esters such as vinyl acetate and vinyl propionate; (meth) acrylic monomers such as (meth) acrylic acid, alkyl (meth) acrylate, and glycidyl (meth) acrylate; unsaturated dicarboxylic acids or anhydrides thereof such as maleic acid, fumaric acid, and maleic anhydride; vinyl esters of carboxylic acids (for example, vinyl acetate, vinyl propionate, and the like); cyclic olefins such as norbomene and cyclopentadiene; and dienes such as butadiene and isoprene. These copolymerizable monomers may be used alone or in combination of two or more. Specific examples of the olefin-based resin include polyethylene (low density, medium density, high density, or linear low density polyethylene, etc.), polypropylene, and copolymers of chain olefins (particularly α-C2-4 olefins) such as an ethylene-propylene copolymer, and a terpolymer such as ethylene-propylene-butene-1. Examples of the polyamide-based resin, a polymer formed of a large number of monomers bonded through amide bonds, include nylon (polyamide) 6, nylon 11, nylon 12, nylon 66, nylon 610, nylon 612, nylon 1010, nylon 1012, and nylon 6T.

### <Additive>

Next, the additive will be described. The composite resin composition and the molded body according to the first exemplary embodiment may include an additive for the purpose of improving the adhesiveness between fibrous filler 2 and base resin 1 or the dispersibility of fibrous filler 2 in base resin 1, or the like. Examples of the additive include various titanate-based coupling agents, silane coupling agents, unsaturated carboxylic acids, maleic acid, maleic anhydride, modified polyolefins grafted with an anhydride thereof, fatty acids, fatty acid metal salts, and fatty acid esters. The silane coupling agent is preferably unsaturated hydrocarbon-based or epoxy-based. The surface of the additive may be treated and modified with a thermosetting or thermoplastic polymer component. In the exemplary embodiment, the additive is preferably a polymer graft-polymerized with a hydrophilic group such as maleic anhydride as described above, and the polymer as the additive is more preferably a resin (compatibilizer) having substantially the same molecular structure as that of base resin 1.

### <Fibrous filler>

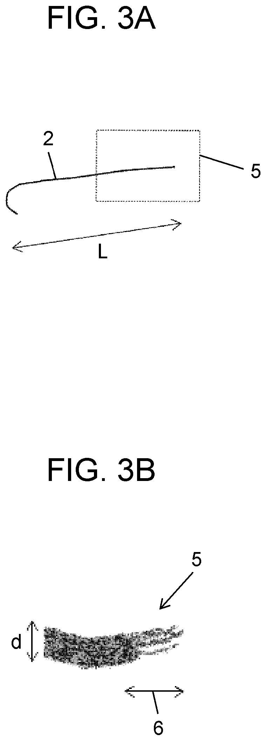

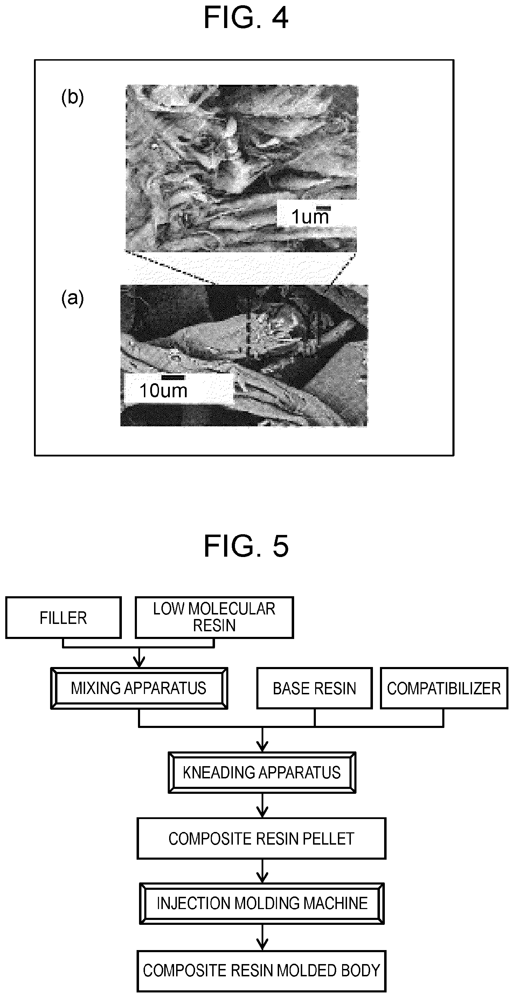

Fig. 3A is a schematic view of fibrous filler 2 as a constituent member of the composite resin molded body according to the first exemplary embodiment. Fig. 3B is a partially enlarged view including end portion 5 of fibrous filler 2 of Fig. 3A. Part (a) of Fig. 4 is an electron microscope image of a fibrous filler in a composite resin molded body according to the first exemplary embodiment. Part (b) is a partially enlarged electron microscope image of the end portion of the fibrous filler in part (a).

Fibrous filler 2 will be described. The fibrous filler also includes a particulate filler with a diameter and a fiber length substantially equal to each other. The particulate filler is basically the same material as fibrous filler 2, and is only different in filler length and/or aspect ratio. Therefore, in the following description, fibrous filler 2 will be described in detail. In the exemplary embodiment, the composite resin composition and the molded body includes fibrous filler 2 (hereinafter, may be simply referred to as "fiber"). In the composite resin molded body molded by using the composite resin composition, fibrous filler 2 is used mainly for the purpose of improving mechanical properties and reducing linear expansion coefficient to improve dimensional stability. For this purpose, fibrous filler 2 preferably has a higher elastic modulus than base resin 1. Specific examples thereof include carbon fibers, carbon nanotubes, pulp, cellulose, cellulose nanofibers, lignocellulose, lignocellulose nanofibers, basic magnesium sulfate fibers (magnesium oxysulfate fibers), potassium titanate fibers, aluminum borate fibers, calcium silicate fibers, calcium carbonate fibers, silicon carbide fibers, wollastonite, xonotlite, various metal fibers, natural fibers such as cotton, silk, wool, and hemp, jute fibers, regenerated fibers such as rayon and cupra, semisynthetic fibers such as acetate and promix, synthetic fibers such as polyester, polyacrylonitrile, polyamide, aramid, and polyolefin, and modified fibers obtained by chemically modifying the surfaces and terminals thereof. Fibrous filler 2 may be needle-like instead of fibrous, and may be wood flour or bark taken from Japanese cedar, Japanese cypress, bamboo, reed, or the like, or powder of coffee, wheat, tea leaves, or the like. Among them, carbons and celluloses are particularly preferable from the viewpoint of availability, high elastic modulus, and environmental properties. Furthermore, from the viewpoint of a circulatory society, natural fibers or natural materials such as celluloses and wood flour, and waste materials obtained therefrom are preferable.

The shape of the fibrous filler and the particulate filler will be described. In the case of natural fibers and natural materials, the starting materials of the fibrous filler and the particulate filler are the same, and the particulate filler is pulverized more finely to be particulate. In Fig. 3A, reference mark L indicates the length of the fibrous filler or the particulate filler (hereinafter, may be referred to as "fiber length"). In Fig. 3B, reference mark "d" indicates the width of the fibrous filler or the particulate filler (hereinafter, may be referred to as "fiber diameter"). With regard to the fibrous filler and the particulate filler, the elastic modulus is improved when fibers having a large aspect ratio (L/d) are contained in a large amount, that is, when fibrous fillers are contained in a large amount. The fibrous filler preferably has an aspect ratio of more than or equal to 10. However, when fibers having a large aspect ratio are contained in a large amount, entanglement of the fibers increases, and the fluidity and moldability deteriorate. On the other hand, when fibers having a small aspect ratio are contained in a large amount, that is, when particulate fillers are contained in a large amount, the fluidity is improved, there are few fiber aggregates, and the appearance is good. The particulate filler preferably has an aspect ratio of less than or equal to 2. However, when fibers having a small aspect ratio, that is, particulate fillers, are contained in a large amount, the elastic modulus decreases.

The fibrous filler is included, for example, in a proportion of more than or equal to 1 wt% and less than or equal to 10 wt% of the filler, and the particulate filler is included, for example, in a proportion of more than or equal to 50 wt% and less than or equal to 70 wt% of the filler.

Next, the additive will be described. The additive improves fluidity, and examples thereof include a wax, a plasticizer, an internal additive, and an external additive. An additive incompatible with the base resin may easily cause a split at the interface with the base resin, becoming a starting point of a crack. Therefore, the additive is preferably a low molecular weight product of the base resin.

### <Base resin and low molecular weight product (low molecular weight resin)>

When the molecular weight of the base resin and the molecular weight of the low molecular weight resin is too close with each other, the effect of improving fluidity of the base resin is not exhibited. When the values are too far from each other, bleed-out easily occurs after molding. The appropriate molecular weight range is calculated by an experiment or a simulation. The number average molecular weight Mnk of the base resin is preferably 10 to 500 times the number average molecular weight Mnt of the low molecular weight resin. The molecular weight peak of the composite resin composition and the molded body is preferably present in a two-peak waveform: the peak of the base resin and the peak of the low molecular weight product, instead of in a broad one-peak waveform. This makes it possible to achieve both strength as a composite resin and fluidity during molding.

The state of the resin and the fibrous filler in the composite resin composition and the molded body will be described. When the low molecular weight resin is scattered in the composite resin, strength reduction and bleed-out are simultaneously caused. Preliminary mixing, described later, makes a structure that: the low molecular weight resin is present in a greater amount around the fibrous filler and the particulate filler, and the base resin is present on the outer periphery thereof. When the particulate filler is covered with the low molecular weight resin, deterioration of fluidity due to entanglement of fibers can be suppressed. Although stress tends to concentrate on the interface between the filler and the base resin, the presence of a soft low molecular weight resin can relax the stress and improve the strength. Furthermore, since the base resin is present on the outer side of the low molecular weight resin, the low molecular weight resin that easily bleeds out is not present on the outer side, and the molded body is difficult to show bleed-out.

As illustrated in Fig. 3B and part (b) of Fig. 4, in the most preferable structure, fibrous filler 2 has defibrated part 6 in the fiber length direction, and defibrated part 6 is partially defibrated. Being defibrated, fibrous filler 2 can entangle a large amount of low molecular weight resin 4 to have them around. Defibrated part 6 indicates a defibration position. The optimum shape of the fiber is calculated as follows from experiments and simulation results. Defibrated part 6 is preferably more than or equal to 5% and less than or equal to 30% of fiber length L of entire fibrous filler 2. When defibrated part 6 is less than 5% of entire fiber length L, the specific surface area is small and the low molecular weight resin can not be present in a large amount. When defibrated part 6 is more than or equal to 30%, the resin is thickened and the fluidity is deteriorated.

As the strength of the composite resin molded body, the relationship between the aspect ratio and the elastic modulus will be described. When stress is loaded to the composite resin molded body including a fiber having a large aspect ratio, the resin is elongated but the high rigidity fiber is hardly elongated, so that the composite resin is not distorted. Therefore, the elastic modulus is improved. On the other hand, when a fiber having a small aspect ratio is included, the fiber has a weakened effect of suppressing distortion under stress load, so that the composite resin is distorted and the elastic modulus decreases.

The relationship between the aspect ratio and the impact resistance will be described. When impact is loaded to the composite resin molded body including a fiber having a large aspect ratio, the fiber cannot follow the elongation of the resin, a crack is generated between the resin and the fiber, and the crack becomes the starting point to develop a breakage. On the other hand, when a fiber having a small aspect ratio is included, the fine fiber can follow the elongation of the resin under stress load, so that cracks are less likely to occur and breakage is less likely to occur.

In order to further improve the mechanical properties, it is preferable that the specific surface area of the fibrous filler is large because a larger bonding interface between the fibrous filler and the base resin leads to an improved elastic modulus. In order to increase the specific surface area of the fibrous filler, in the most preferable structure, a single fiber is partially defibrated in at least one end portion in the fiber length direction, as illustrated in Fig. 3B and Fig. 4.

Next, the characteristics of fibrous filler 2 will be described. The types of base resin 1 and fibrous filler 2 are as described above. However, when fibrous filler 2 is too soft, that is, has a small elastic modulus, with respect to base resin 1, the composite resin molded body has a small elastic modulus as a whole, resulting in a decrease in strength. On the other hand, when fibrous filler 2 is too hard, that is, has a large elastic modulus, with respect to base resin 1, shock waves generated at the time of impact are not propagated, and the shock waves are absorbed at the interface between base resin 1 and fibrous filler 2, so that cracks and creases are likely to occur in the vicinity of the interface, and as a result, impact strength is reduced. Therefore, as for the relationship between the elastic modulus of base resin 1 and the elastic modulus of fibrous filler 2, the elastic modulus of fibrous filler 2 is higher, and the difference is preferably as small as possible. The optimum relationship is calculated from simulation results, and the elastic modulus difference between base resin 1 and fibrous filler 2 is preferably within 20 GPa.

For the purpose of improving adhesion to base resin 1 or dispersibility in the composite resin molded body, fibrous filler 2 used may be surface-treated with various titanate-based coupling agents, silane coupling agents, unsaturated carboxylic acids, maleic acid, maleic anhydride, modified polyolefins grafted with an anhydride thereof, fatty acids, fatty acid metal salts, fatty acid esters, or the like. Alternatively, fibrous filler 2 may be surface-treated with a thermosetting or thermoplastic polymer component.

### <Method of producing composite resin molded body>

Next, the method of producing the composite resin molded body will be described. Fig. 5 is a flowchart outlining an example of the production process of the composite resin molded body according to the first exemplary embodiment. Before introduced into a melt-kneading apparatus, the fibrous filler also including the particulate filler, and the powdery or liquid low molecular weight resin (low molecular weight product) are preliminary mixed. In the preliminary mixing, heating is not performed, and mixing is performed with a mixer, a stirrer, or the like. As a result, the low molecular weight resin enters the fluffed fiber portion of the fibrous filler. Thereafter, the mixture is charged into the melt-kneading apparatus (kneading apparatus) together with the base resin, the compatibilizer, and the like, other additives are added as necessary, and the mixture is melt-kneaded in the apparatus. As a result, the base resin, the low molecular weight resin, the additive, and the like are melted, and the fibrous filler and the like are dispersed in the melted base resin and the like. At the same time, the shearing action of the apparatus promotes defibration of aggregates of fibrous fillers, and the fibrous fillers can be finely dispersed in the base resin.

Conventionally, as the fibrous filler and the particulate filler, those obtained by preliminary defibrating fibers through a pretreatment such as wet dispersion have been used. However, when the fibrous filler is preliminary defibrated in a solvent used in wet dispersion, the fibrous filler is more easily defibrated than defibrated in the molten base resin, so that it is difficult to defibrate only the end portion, and the entire fibrous filler is defibrated. In addition, there is a problem that the number of processes increases by combining the pretreatment and productivity deteriorates.

On the other hand, in the production process of the composite resin molded body in the exemplary embodiment, a melt-kneading treatment (all-dry method) is performed together with the base resin, the additive, and the like without performing a wet dispersion pretreatment for the purpose of defibration and modification of the fibrous filler and the particulate filler. Since the fibrous filler is not subjected to wet dispersion in the method, the fibrous filler can be partially defibrated only in the end portion as described above. In addition, the method needs fewer steps and therefore can improve productivity.

In order to prepare the fiber of the exemplary embodiment by the all-dry method, it is preferable to apply high shear stress during kneading. Specific examples of the kneading method include a single screw kneader, a twin screw kneader, a roll kneader, a Banbury mixer, and a combination thereof. From the viewpoint of easy application of high shear and high mass productivity, a continuous twin screw kneader and a continuous roll kneader are particularly preferable. A kneading method other than the above may be used as long as high shear stress can be applied.

The composite resin composition extruded from the melt-kneading apparatus is prepared in a pellet form through a cutting process such as a pelletizer. As a method of pelletizing, there are an air hot cut method, an underwater hot cut method, a strand cut method, and the like as a method performed immediately after melting of the resin. Alternatively, there is also a pulverization method that a molded body or a sheet is once molded and then pulverized and cut.

The pellet as the composite resin composition is melted and injection-molded in a mold. Thereby, an injection-molded article can be produced as the composite resin molded body. Since the fibrous filler and the particulate filler is mixed in the pellet as described above, an injection-molded article excellent in antibacterial properties, strength, and appearance can be obtained.

Hereinafter, examples and comparative examples in experiments performed by the inventors will be described.

### (Example 1)

A pulp-dispersed polypropylene composite resin molded body was produced by the following production method.

As the starting material of the fibrous filler and the particulate filler, a softwood pulp (manufactured by MITSUBISHI PAPER MILLS LIMITED, trade name: NBKP Celgar) was used. The softwood pulp was pulverized with a pulverizer to obtain a mixture of the fibrous filler and the particulate filler. The aspect ratio for each and the surface area due to fluffing were adjusted in the pulverizing process. The mixture of the fibrous filler and the particulate filler, and a low molecular weight polypropylene as the additive (manufactured by Sanyo Chemical Industries, Ltd., trade name: VISCOL 550-P) were weighed at a weight ratio of 55 : 5, and dry-blended with a mixer. Thereafter, a polypropylene as the base resin (manufactured by Prime Polymer Co., Ltd., trade name: J108M), a maleic anhydride-modified polypropylene as the additive (manufactured by Sanyo Chemical Industries, Ltd., trade name: UMEX), and the mixture of the fibrous filler and the additive were weighed at a weight ratio of 38 : 2 : 60, and dry-blended. Thereafter, the mixture was melt-kneaded and dispersed with a twin-screw kneader (KRC kneader, manufactured by Kurimoto, Ltd.). The shearing force can be changed by changing the screw configuration of the twin-screw kneader. In Example 1, the middle-shear type specification was adopted. The resin melt was hot-cut to prepare pulp-dispersed polypropylene pellets as the composite resin composition.

Using the prepared pulp-dispersed polypropylene pellets, a test piece of the composite resin molded body was prepared with an injection molding machine (180AD, manufactured by The Japan Steel Works, Ltd.). The preparation conditions of the test piece were a resin temperature of 210°C, a mold temperature of 60°C, an injection speed of 60 mm/s, and a holding pressure of 80 MPa. The shape of the test piece was changed according to the evaluation items described below, and a No. 1 size dumbbell was prepared for measuring the elastic modulus. The obtained test piece of the pulp-dispersed polypropylene composite resin molded body was evaluated by the following method.

### (Aspect ratio and end portion defibration rate of fiber)

The obtained pulp-dispersed polypropylene pellets were immersed in a xylene solvent to dissolve the polypropylene, and the remaining pulp fibers were observed for the fiber shape by SEM. About 50 representative fibers at 5 locations were measured. As a result, the average proportion of fibers having an aspect ratio of more than or equal to 10 was 7.5%, the average proportion of fibers having an aspect ratio of less than or equal to 2 was 55%, and the remaining fibers had an aspect ratio of more than 2 and less than 10. The filler having an aspect ratio of more than or equal to 10 is referred to as the fibrous filler, and the filler having an aspect ratio of less than or equal to 2 is referred to as the particulate filler. The end portion of the fiber was in a defibrated state, and the average value of the proportion of the defibrated part was 23% in the length of a single fiber.

### (Fluidity)

In order to evaluate the fluidity of the obtained pulp-dispersed polypropylene pellet, the melt viscosity was measured with a melt viscometer (trade name: Capilograph F-1, manufactured by Toyo Seiki Seisaku-sho, Ltd.). The melt viscosity was measured at a shear rate in a range of 12 to 2430 [1/sec]. The melt viscosity was about 250 [Pa·s] at a shear rate of 1220 [1/sec].

### [Moldability]

In order to evaluate the moldability of the obtained pulp-dispersed polypropylene pellet, a dumbbell-shaped molded body having a thickness of about 1 mm was molded. Thus, fluidity to the end portion for molding was evaluated, and moldability of the end portion was confirmed.

### (Deposition on surface of molded body)

The obtained No. 1 size dumbbell was allowed to stand in a high temperature and high humidity environment at 40°C and 85% for 1 week, and then the surface of the molded body was subjected to surface analysis to determine whether the low molecular weight resin was deposited. The surface analysis was performed by gel permeation chromatography. From the results of gel permeation chromatography, it was confirmed that the low molecular weight resin was not observed on the surface of the molded body and there was no bleed-out on the surface.

### (Elastic modulus of composite resin molded body)

A bending test was performed using the obtained No. 1 dumbbell-shaped test piece. The bend elastic modulus was 4.3 GPa, and the reinforcing effect by the filler was observed.

### (Appearance of composite resin molded body)

The composite resin molded body was visually evaluated for appearance. In a case where color unevenness or browning did not occur and the appearance was uniform, the appearance was regarded as OK, and in a case where color unevenness or browning occurred, the appearance was regarded as NG. The appearance of this sample was OK.

### (Example 2)

In Example 2, a low shear type kneader was used so that the fibers did not defibrate. The pulp-dispersed polypropylene pellet and the composite resin molded body were prepared in the same material conditions and process conditions as in Example 1 except for the above conditions. The evaluation was performed in the same manner as in Example 1.

### (Example 3)

In Example 3, the number of passes through the kneader was set to seven times the number in a normal case, so that the fibers were more defibrated. The pulp-dispersed polypropylene pellet and the composite resin molded body were prepared in the same material conditions and process conditions as in Example 1 except for the above conditions. The evaluation was performed in the same manner as in Example 1.

### (Example 4)

In Example 4, the concentration of the pulp was changed to 70%. The pulp-dispersed polypropylene pellet and the composite resin molded body were prepared in the same material conditions and process conditions as in Example 1 except for the above conditions. The evaluation was performed in the same manner as in Example 1.

### (Example 5)

In Example 5, polyethylene having a number average molecular weight of 200,000 was used as the base resin, polyethylene having a number average molecular weight of 2000 was used as the low molecular weight resin, and acid-modified polyethylene was used as the compatibilizer. The pulp-dispersed polyethylene pellet and the composite resin molded body were prepared in the same material conditions and process conditions as in Example 1 except for the above conditions. The evaluation was performed in the same manner as in Example 1.

### (Comparative Example 1)

In Comparative Example 1, the mixture of the fibrous filler and the particulate filler, and the low molecular weight polypropylene as the additive were not preliminary mixed in a mixer, and the polypropylene as the base resin and the additive were all mixed at the same time. The pulp-dispersed polyethylene pellet and the composite resin molded body were prepared in the same material conditions and process conditions as in Example 1 except for the above conditions. The evaluation was performed in the same manner as in Example 1.

### (Comparative Example 2)

In Comparative Example 2, the low molecular weight polypropylene as the additive had a number average molecular weight of 200. The pulp-dispersed polyethylene pellet and the composite resin molded body were prepared in the same material conditions and process conditions as in Example 1 except for the above conditions. The evaluation was performed in the same manner as in Example 1.

### (Comparative Example 3)

In Comparative Example 3, the low molecular weight polypropylene as the additive had a number average molecular weight of 20,000. The pulp-dispersed polyethylene pellet and the composite resin molded body were prepared in the same material conditions and process conditions as in Example 1 except for the above conditions. The evaluation was performed in the same manner as in Example 1.

### (Comparative Example 4)

In Comparative Example 4, the starting material of the pulp was changed to a powdered cellulose. The pulp-dispersed polypropylene pellet and the composite resin molded body were prepared in the same material conditions and process conditions as in Example 1 except for the above conditions. The evaluation was performed in the same manner as in Example 1.

### (Comparative Example 5)

In Comparative Example 5, the pulp was not pulverized. The pulp-dispersed polypropylene pellet and the composite resin molded body were prepared in the same material conditions and process conditions as in Example 1 except for the above conditions. The evaluation was performed in the same manner as in Example 1.

### (Comparative Example 6)

In Comparative Example 6, the low molecular weight polypropylene as the additive was not added. The pulp-dispersed polyethylene pellet and the composite resin molded body were prepared in the same material conditions and process conditions as in Example 1 except for the above conditions. The evaluation was performed in the same manner as in Example 1.

### (Comparative Example 7)

In Comparative Example 7, the compatibilizer was not added. The pulp-dispersed polyethylene pellet and the composite resin molded body were prepared in the same material conditions and process conditions as in Example 1 except for the above conditions. The evaluation was performed in the same manner as in Example 1.

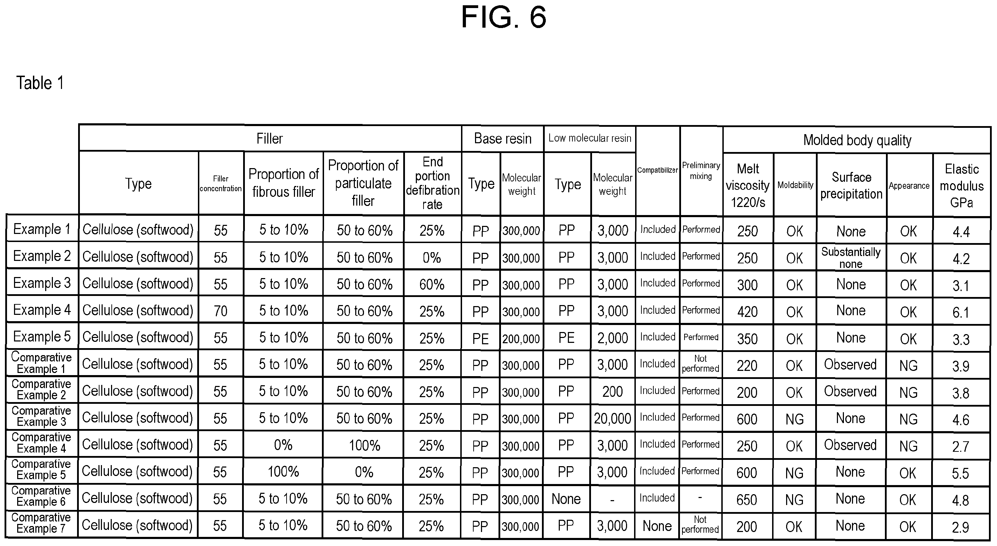

The measurement results in Examples 1 to 5 and Comparative Examples 1 to 7 are shown in Table 1 in Fig. 6.

As is apparent from Table 1 in Fig. 6, in Example 2, a low shear type kneader was used and the end portion defibration rate of the fiber was 0%, and therefore the force of holding the low molecular weight resin around the fiber was slightly weak. Clear bleed-out was not observed, but surface precipitation (bleed-out) was slightly observed. As a result, the appearance was slightly poor. It has been confirmed that a composite resin molded body that is excellent in fluidity and moldability, and can suppresses appearance defects of the molded body such as bleed-out is obtained when a fibrous filler and a particulate filler having an aspect ratio smaller than that of the fibrous filler are included; the fibrous filler has an aspect ratio of more than or equal to 10, and the particulate filler has an aspect ratio of less than or equal to 2; as the additive, a low molecular weight resin that belongs to the same kind of resin as the base resin is preliminary mixed with the fibrous filler; the number average molecular weight is 10 to 500 times that of the base resin; and the composite resin molded body has two molecular weight peaks.

In Example 3, the number of passes through the kneader was set to seven times the number in a normal case, so that the fibers were more defibrated, thereby the fiber was considerably defibrated in the composite resin molded body, and the end portion defibration rate was 60%. Therefore, the low molecular weight resin can be held around the fiber, and a molded body was obtained without bleed-out, but, as a result, the elastic modulus was low.

In Example 4, the concentration of the pulp was changed to 70%, and the high fiber concentration resulted in a slightly higher melt viscosity and molding was slightly difficult. However, it was confirmed that a composite resin molded body that can suppress appearance defects of the molded body such as bleed-out was obtained.

In Example 5, the base resin and the low molecular weight resin were polyethylene, and therefore, the elastic modulus decreased as a whole due to the change of the kind of resin and molding was slightly difficult due to the increased melt viscosity as compared with Example 1 using polypropylene. However, it was confirmed that a composite resin molded body that can suppress appearance defects of the molded body such as bleed-out was obtained.

In Comparative Example 1, preliminary mixing was not performed, and the low molecular weight resin was not present in a large amount around the fiber. Therefore, the low molecular weight resin was precipitated on the surface, that is, bleed-out, and the appearance was NG.

In Comparative Example 2, the low molecular weight polypropylene had a number average molecular weight of 200. The low molecular weight resin having a molecular weight excessively smaller than that of the base resin was not miscible, and was precipitated on the surface, that is, bleed-out, and the appearance was NG.

In Comparative Example 3, the low molecular weight polypropylene had a number average molecular weight of 20,000. Although bleed-out was not observed, the melt viscosity was high, the effect of improving fluidity due to the low molecular weight resin was not observed, the moldability was poor, and the molded body did not have fluidity to the end portion. Therefore, the appearance was NG.

In Comparative Example 4, the starting material for the pulp was changed to powdered cellulose, and the proportion of the fibrous filler was 0%, and the proportion of the particulate filler was 100%. As a result, the low molecular weight resin could not be held around the fiber, and the low molecular weight resin was precipitated on the surface, that is, bleed-out, and the appearance was NG. In addition, as a result, the reinforcing effect by the fibrous filler was reduced, and the elastic modulus was also low.

In Comparative Example 5, the pulp was not pulverized, and the proportion of the fibrous filler was 100%, and the proportion of the particulate filler was 0%. As a result, the elastic modulus was slightly increased, but the melt viscosity was increased, the moldability was poor, and the molded body did not have fluidity to the end portion. Therefore, the appearance was NG.

In Comparative Example 6, the low molecular weight resin was not added, and therefore, the melt viscosity was increased, the moldability was poor, and the molded body did not have fluidity to the end portion. Therefore, the appearance was NG.

In Comparative Example 7, the compatibilizer was not added, and therefore, the fibrous filler was not sufficiently dispersed in the base resin, and the elastic modulus was as low as 2.9 GPa.

From the above evaluation, it has been confirmed that a composite resin molded body that is excellent in fluidity and moldability, and can suppresses appearance defects of the molded body such as bleed-out is obtained when a fibrous filler and a particulate filler having an aspect ratio smaller than that of the fibrous filler are included; the fibrous filler has an aspect ratio of more than or equal to 10, and the particulate filler has an aspect ratio of less than or equal to 2; as the additive, a low molecular weight resin that belongs to the same kind of resin as the base resin is preliminary mixed with the fibrous filler; the number average molecular weight is 10 to 500 times that of the base resin; and the composite resin molded body has two molecular weight peaks.

The present disclosure includes an appropriate combination of any exemplary embodiment and/or example among the various above-described exemplary embodiments and/or examples, and effects of each of the exemplary embodiments and/or examples can be achieved.

### INDUSTRIAL APPLICABILITY

The composite resin molded body according to the present disclosure can provide a composite resin molded body that can improve fluidity, can suppress bleed-out, and is superior in mechanical strength to conventional general-purpose resins. The present disclosure can improve the properties of the base resin, and thus can be utilized as an alternative to engineering plastics or an alternative to metal materials. Therefore, the manufacturing cost of various industrial products or daily necessities made of engineering plastics or metals can be greatly reduced. Furthermore, the present disclosure can be used for daily necessities, household electric appliance housings, building materials, automobile members, and the like.

### REFERENCE MARKS IN THE DRAWINGS

1: base resin
2: fibrous filler (filler)
3: particulate filler (filler)
4: low molecular weight resin
5: end portion
6: defibrated part

## Claims

1. A composite resin composition comprising: a base resin; a low molecular weight resin; a compatibilizer; and a filler,
wherein the low molecular weight resin and the base resin belong to a same kind of resin,
a molecular weight of the low molecular weight resin is lower than a molecular weight of the base resin, and
the compatibilizer has a molecular structure that is substantially a same as a molecular structure of the base resin.

2. The composite resin composition according to Claim 1, wherein the compatibilizer is a graft polymer of a resin having a molecular structure that is substantially the same as a molecular structure of the base resin.

3. The composite resin composition according to Claim 1, wherein a number average molecular weight Mnk of the base resin is more than or equal to 10 times and less than 500 times a number average molecular weight Mnt of the low molecular weight resin, and
the composite resin composition has two molecular weight peaks.

4. The composite resin composition according to Claim 1, wherein the low molecular weight resin and the compatibilizer are present in a greater amount around the filler than in the base resin.

5. The composite resin composition according to Claim 1, wherein the filler includes: a fibrous filler having an aspect ratio of more than or equal to 10; and a particulate filler having an aspect ratio of less than or equal to 2,
the fibrous filler is included in a proportion of more than or equal to 1 wt% and less than or equal to 10 wt% of the filler, and
the particulate filler is included in a proportion of more than or equal to 50 wt% and less than or equal to 70 wt% of the filler.

6. The composite resin composition according to Claim 5, wherein the fibrous filler is defibrated only in an end portion in a fiber length direction of the fibrous filler, and
a concentration of the low molecular weight resin around the end portion of the fibrous filler is higher than a concentration of the low molecular weight resin around a central portion in the fiber length direction of the fibrous filler.

7. The composite resin composition according to Claim 1, wherein the filler is a natural material containing cellulose.

8. The composite resin composition according to Claim 1, wherein the base resin is an olefin resin.

9. A composite resin molded body comprising the composite resin composition according to any one of Claims 1 to 8.
